(19) **Europäisches Patentamt / European Patent Office / Office européen des brevets**

(11) **EP 3 387 595 B1**

(12) **EUROPEAN PATENT SPECIFICATION**

(45) Date of publication and mention
of the grant of the patent:
**04.11.2020 Bulletin 2020/45**

(51) Int Cl.:
*G06Q 10/06* (2012.01)     *G06Q 30/00* (2012.01)
*G06Q 30/02* (2012.01)

(21) Application number: **16874053.8**

(86) International application number:
**PCT/US2016/066177**

(22) Date of filing: **12.12.2016**

(87) International publication number:
**WO 2017/100773 (15.06.2017 Gazette 2017/24)**

(54) **PREDICTING CHURN FOR (MOBILE) APP USAGE**

VORHERSAGE VON CHURN ZUR NUTZUNG EINER (MOBILEN) APP

PRÉDICTION D'ATTRITION POUR UNE UTILISATION D'APPLICATION (MOBILE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2015 US 201562265552 P**

(43) Date of publication of application:
**17.10.2018 Bulletin 2018/42**

(73) Proprietor: **Avg Netherlands B.V.**
**San Francisco, CA 94107 (US)**

(72) Inventors:
• **DE KNIJF, Jeroen**
**1092 SB Amsterdam (NL)**

• **DE FRANCISCO, Vera Manuel**
**2021 XN Haarlem (NL)**

(74) Representative: **Abel & Imray**
**Westpoint Building**
**James Street West**
**Bath BA1 2DA (GB)**

(56) References cited:
**US-A1- 2007 185 867     US-A1- 2007 185 867**
**US-A1- 2009 055 435     US-A1- 2013 054 306**
**US-A1- 2014 180 752     US-A1- 2015 100 887**
**US-A1- 2015 100 887**

**Description**

**FIELD OF THE INVENTION**

The present invention generally relates to personal electronic devices, such as smartphones, tablets and computers, and in particular to metrics and models for predicting what percentage of the population that tries a given application on a user device will continue using it at various subsequent time periods, and with what regularity.

**BACKGROUND OF THE INVENTION**

This application relates generally to application software, commonly referred to as an "app." Apps are computer software designed to help the user to perform specific tasks. Apps may be executed on a variety of computing devices, such as on mobile devices including smartphones. For example, mobile apps are software applications designed to run on smartphones, tablet computers and other mobile devices. The apps are available through application distribution platforms, which are typically operated by the owner of the mobile operating system, such as, for example, the Apple App Store, Google Play, Windows Phone Store and BlackBerry App World. Mobile devices, such as smartphones and tablet computers, are designed to readily accept the apps for installation and operation.

Churn prediction is the process of determining the percentage of the population (i.e., users) that will stop using a given service or product after having initially tried it. All mobile app publishing companies are interested in the percentage of users that will be still using an app one week after a user has installed the app.

Traditionally, churn prediction is based upon a consumer's characteristics, such as age, sex, and zip code. However, these categories are simply too broad to granularly predict how a user of an app seems to like using it, and whether he or she will continue to use it, continue to experiment with it, or decide that it is not useful to him or her.

Thus, it is often how a user interacts with a new application that both determines whether they will continue, and if they have a sufficient interest level to actually learn how to use it in a meaningful way. This is not just a matter of age, sex and residential neighborhood of a user. It is more about their personality, their needs, and how they relate to a given software application during that window of time in which the application is making its "first impression" on them.

What is needed in the art are methods for more accurately predicting churn based upon actual user activity involving the application.

US 2015/100887 A1, published 9 April 2015, relates to an electronic terminal device configured to store data including a number of predetermined fingerprints, each characterizing display usage such as visual objects associated with software entities and potentially shown to the user via the display during execution of the software entity, and log data including behavioral data indicative of user engagement with the UI of the device, the logging incorporating detecting display usage, and storing indication of such detection in a memory of the device, wherein the device is configured to determine the status of the display, and execute logging according to the determination.

**BRIEF DESCRIPTION OF THE DRAWINGS:**

Fig. 1 is a chart of exemplary discriminating values and associated discriminating patterns for a churn class according to an exemplary embodiment of the present invention;

Fig. 2 is a chart of exemplary discriminating patterns for a loyals class according to an exemplary embodiment of the present invention;

Figs. 3-14 are exemplary screen shots (or portions thereof) from an exemplary beta application called "AVG WiFi Assistant" used to test churn and loyalty prediction according to an exemplary embodiment of the present invention;

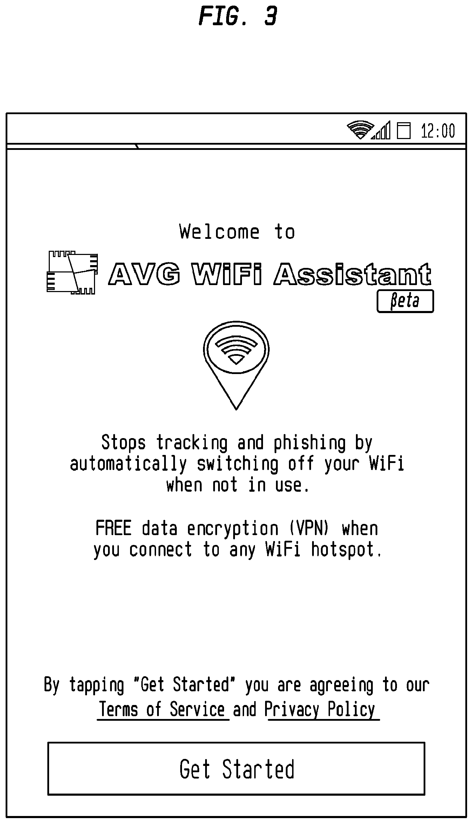

Fig. 3 depicts an exemplary activation screen;

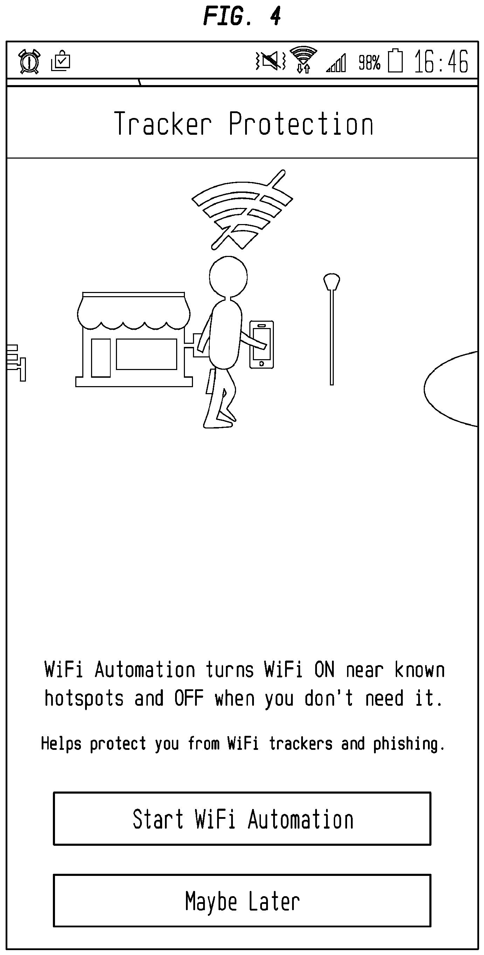

Fig. 4 depicts an exemplary OnboardWiFi screen;

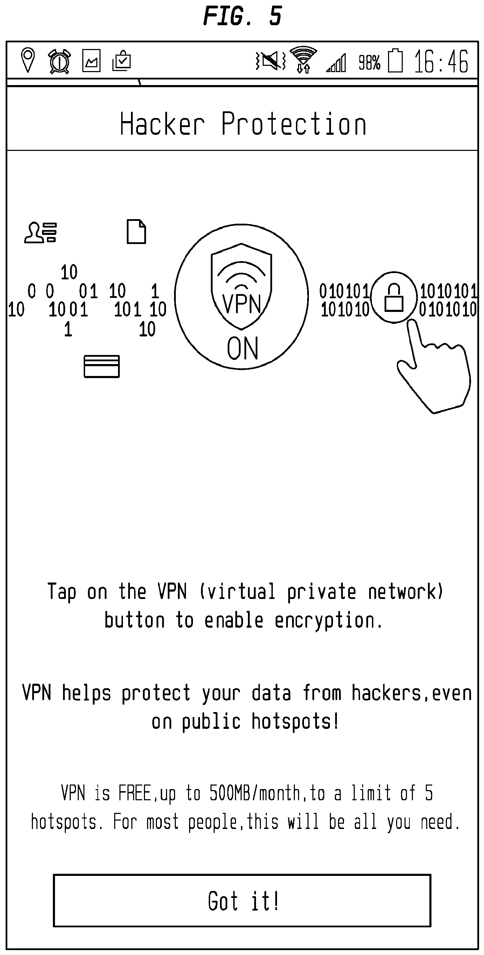

Fig. 5 depicts an exemplary OnboardVPN screen;

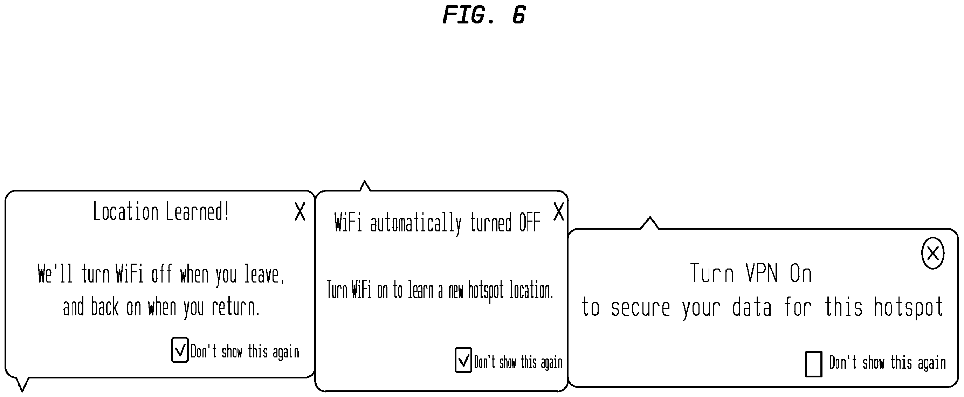

Fig. 6 depicts exemplary coaching bubbles displayed in connection with the Onboarding screen of Fig. 4, to help users to help users learn the functionality of Wifi Assistant;

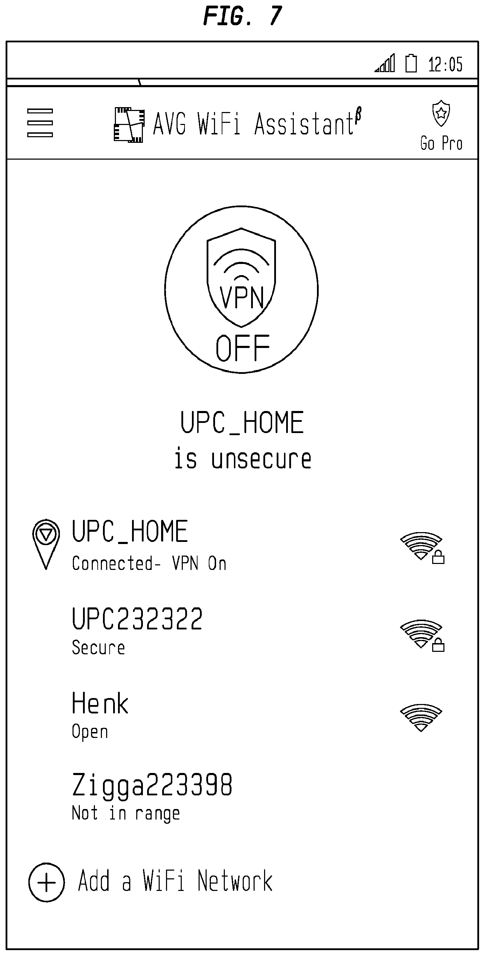

Fig. 7 depicts an exemplary Home screen;

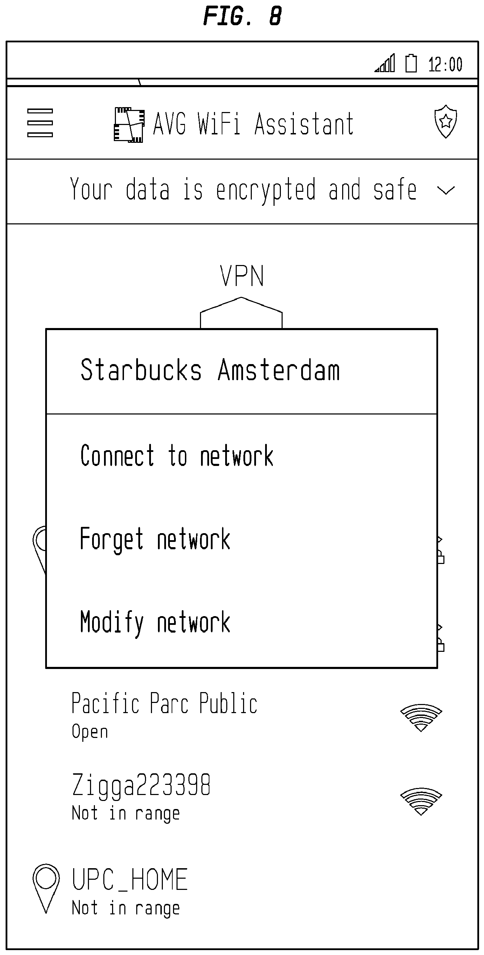

Fig. 8 depicts an exemplary screen displayed to a user upon the user choosing a WiFi hotspot;

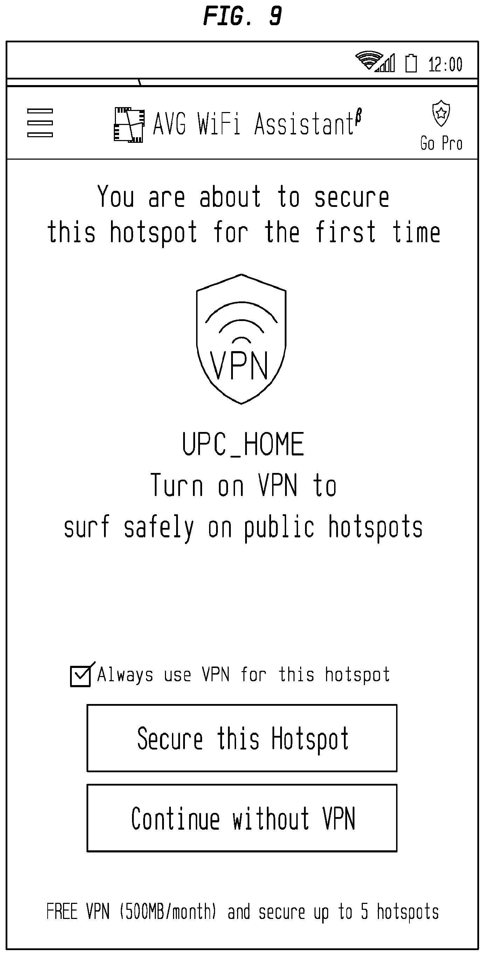

Fig. 9 is an exemplary Secure Hotspot screen displayed to a user upon choosing a WiFi hotspot as in Fig. 8;

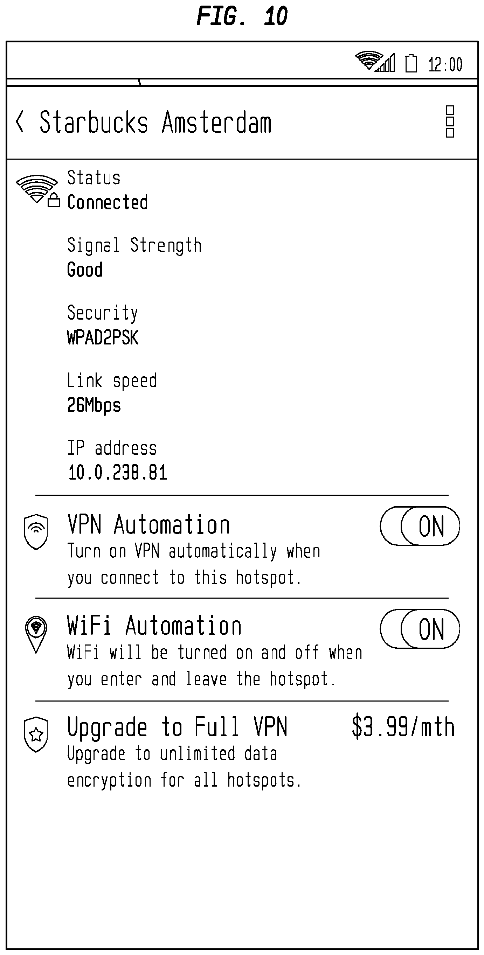

Fig. 10 depicts an exemplary WiFi Settings screen, used to set parameters of a chosen WiFi hotspot;

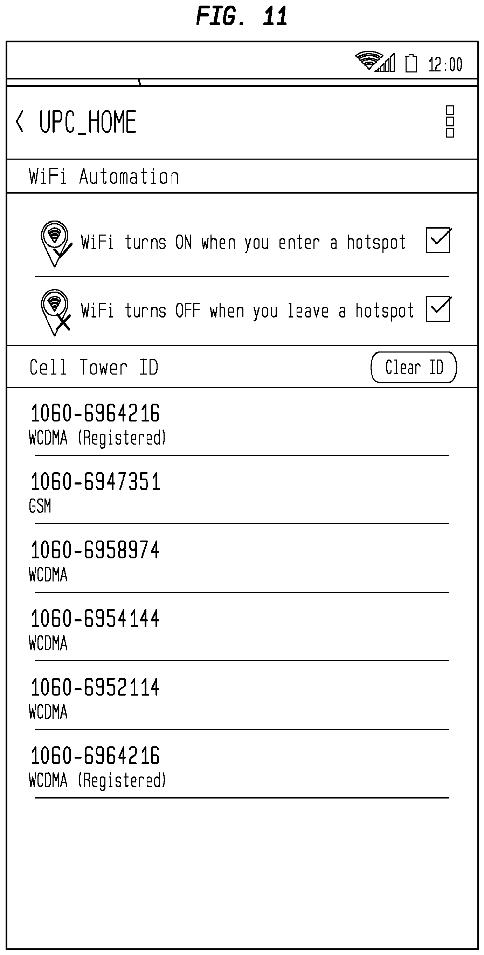

Fig. 11 depicts an exemplary WiFi Settings Advanced screen;

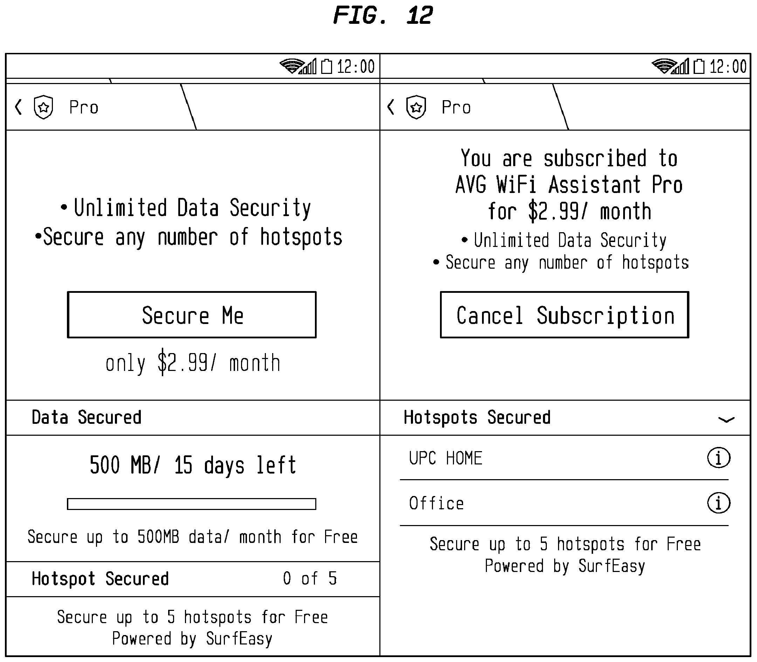

Figs. 12 depicts an exemplary Upgrade screen shot pair;

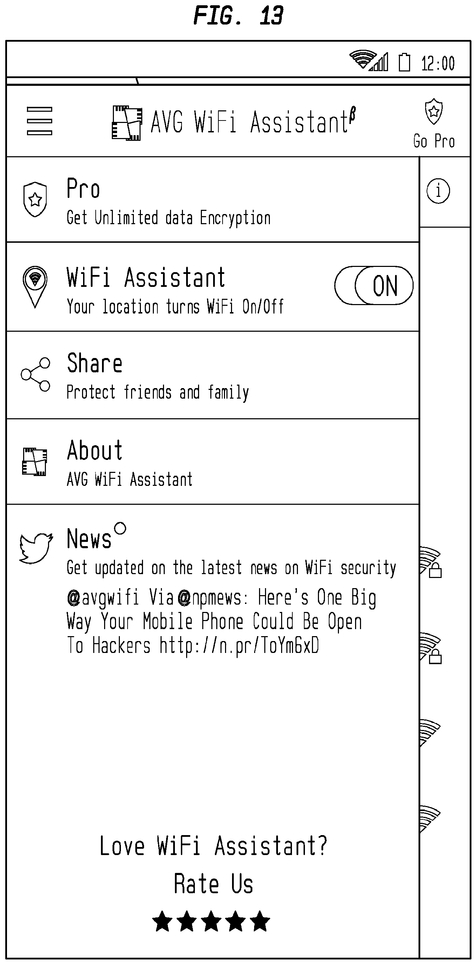

Fig. 13 depicts an exemplary Side Menu screen, accessed by a user from the screen shown in Fig. 7, for example;

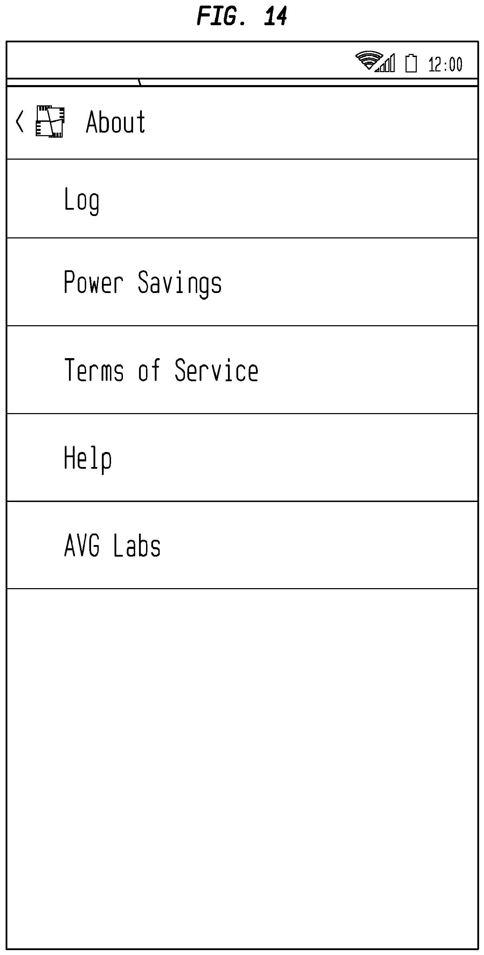

Fig. 14 depicts an exemplary About screen;

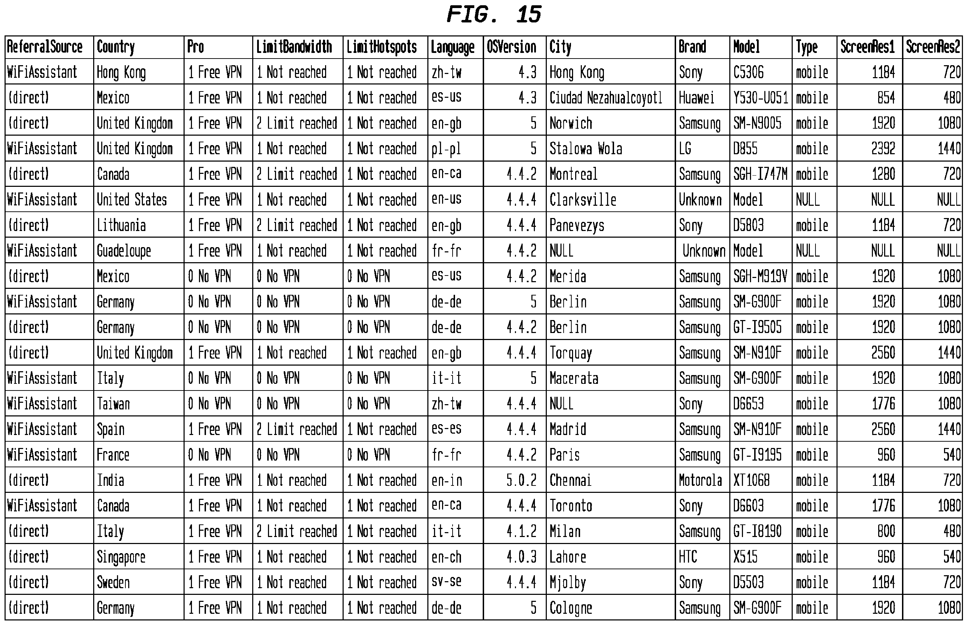

Fig. 15 is an exemplary table containing various feature vectors according to an exemplary embodiment of the present invention; and

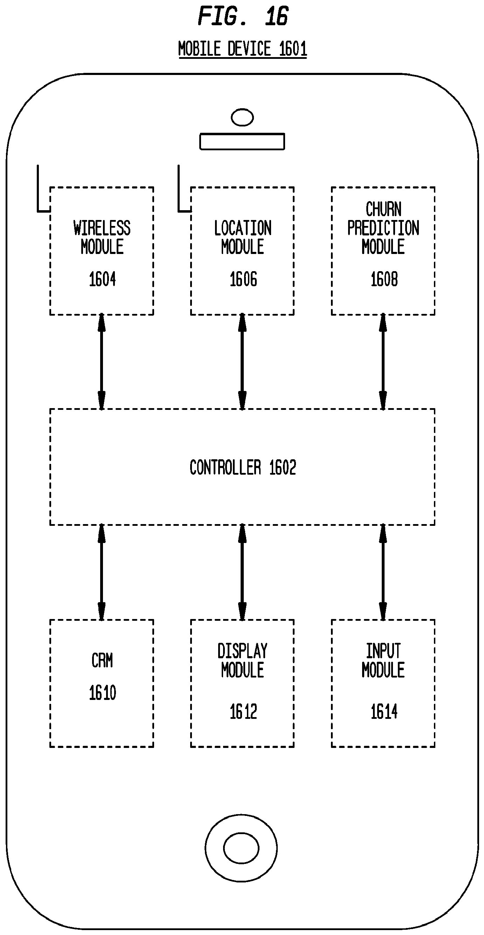

Fig. 16 depicts an exemplary mobile device on which a churn prediction module may be deployed according to an exemplary embodiment of the present invention.

## SUMMARY OF THE INVENTION:

The invention is defined by a method according to claim 1, a computer-readable medium according to claim 12 and a system according to claim 13. Further embodiments are defined by the dependent claims.
A churn prediction model is presented that uses both behavioral data as well as user characteristics to predict whether a given user will churn (i.e., stop using) an application. Initially a training set of user interactions can be correlated to a churn probability value for various sequences of user activity. Then, as regards a real time user, user actions in navigating through the app may be recorded, and this information can be used, in addition to user characteristics, to predict the probability that this user will churn, thus implementing in a "nip churn in the bud" approach (or, the inverse, remain loyal and continue to use the app). In some embodiments, a partial set of user actions can be identified as subsequences of known churn sequences. To users performing those subsequences of activity, a real time message, offer or promotion may be sent so as to influence them not to churn. In exemplary embodiments of the present invention, user data may be uploaded from a user's device to proprietary or cloud servers. Churn analysis, or a more detailed churn analysis, using up to the minute collective data for the given app, may, for example, be performed on those servers.

## DETAILED DESCRIPTION OF THE INVENTION:

In exemplary embodiments of the present invention a churn prediction model can be provided that uses both behavioral data as well as user characteristics. In particular, how a user navigates through an app can be recorded, and this data, in addition to a set of user characteristics, can be used to predict the probability that the user will churn (i.e., stop using the application). Estimating this value can be extremely valuable in multiple ways, which can include, for example:

1. Allowing app developers/designers to reshape the flow of an app. That is, using exemplary embodiments of the present invention, over a period of time it can become clear at which point(s) in the app a user will, or will likely, churn. This can indicate that the user interface of the app can be improved, and even inform developers/designers as to what ways to improve it;
2. Providing insights when certain actions (e.g., coupons, promotions, etc.) should be launched to keep the customer using, or engaged with, the app.

### I. Conceptual Definitions

To better understand certain concepts underlying various exemplary embodiments of the present invention, definitions of the following key terms are provided:
*Behavioral data* refers to data regarding how a given app is being used, i.e., how a customer is interacting with the app. In particular, an ordered series of events (i.e. a sequence) that represent various different actions that can be taken by users of the app can be considered. For example, a chat app may consist of the following screens: welcome (w), signup (s), tutorial (t), address book (a), help (h), and chat (c). For a given user i, an ordered series of events may be: (w,s,c,c,c,h,a), while for another user j it may be (w,s,t,a,c,c). In general, this data is collected by enabling analytics for each event so that when a certain event occurs, it is recorded and send to a database.

More formally, we let E = $\{e_1,...,e_n\}$ be the set of $n$ distinct events a user may perform, comprising an alphabet of different screen identifiers -- such as, for example, {w, s, t, a, h, c} in the exemplary chat app referred to above. Thus, the set E is the universe of all possible events (i.e. screen that can be visited and interactions that may be performed at each screen). We then let a sequence $Y = < y_1,...,y_m >$ be an ordered list of events actually performed by the user, i.e. $y_i \in E$ for $1 \leq i \leq$ m. For behavioral data, a transaction can be represented by a tuple (an ordered set of values) $(u_i, Y)$, where $u_i$ is a user identifier and $Y$ a sequence of events. Thus, a tuple associates a given user $u_i$ with a given interactive sequence of events.

*Customer characteristic data* refers to all personal and demographic data that can be obtained about a user. For example, age, sex, country of residence, income, phone brand/model, version of operating system, whether a user is using the pro version (or other version type or designator), etc.. Available customer characteristic data varies for different apps, and is mainly dependent upon which data is collected by the app. For example, for subscription based apps, payment information and email address will be present; on the other hand, for dating applications sex, age and city or town of residence is generally always known.

More formally, for every customer there is a binary vector of length p: $X = \{x_1,...,x_p\}$. Where each $x_i$, $f$ or $1 \leq i \leq$ $p$ represents the presence/absence of the binarized feature i. As with the behavioral data, a transaction is a tuple $(u_i, X)$, where $u_i$ is a user identifier and $X$ a feature vector. Here a tuple associates a given user with a given set of customer characteristic features. Fig. 15 is a table containing various exemplary feature vectors. As can be seen with reference thereto, each row of the table contains data from a different customer or user of the exemplary WiFi Assistant application described below in connection with Figs. 3-14. The data includes the user's country, city and country, the language they used, and information regarding their user device, such as brand, model, type, and the operating system it used.

## II. Churn Predictions: A Two-stage Process

In exemplary embodiments of the present invention a churn prediction application may consist of two stages:

1. A learning stage where a churn model is learned, derived or generated from the data - based on historical data a statistical model to predict churn is learned or generated.

2. A deployment stage, where, in real time settings, a churn model is used to predict whether a user is likely to churn. After some period of time, the model may then be retrained with more recent data.

In exemplary embodiments of the present invention, the entire analysis can be run, with the now larger data set including the more recent data to find a new list of discriminating patterns. However, in some embodiments, after some time it can also be beneficial to only use the newer data.

These stages are next described.

## A. Learning the churn model

### 1. Introduction and Definitions

In order to derive or learn a statistical model for churn prediction from interaction data, multiple historical data transactions are needed. That is, behavioral as well as customer characteristics data from multiple customers is required. Moreover, for this "learning set" it is known whether a customer churned or not, so the data can be correlated to a known outcome.

Let $D = \{(u_1,Y_1),...,(u_n,Y_n)\}$ be the transaction database of behavioral characteristics data, and $A = \{(u_1,X_1),...,(u_n,X_n)\}$ be the transaction database of user characteristics data. As noted above, the elements of each such transaction database is a set of tuples. Similarly, $U = \{u_1,...,u_n\}$ is the database of users. Furthermore, in the training data, because it is historical, a binary class label (for example: "churned" or "loyal") is also known for each user. That is, there is a known labeling function $C:U \rightarrow$ *churned|loyal* for all users in the historical data set. With $D^{churn}$, $D^{loyal}$ we denote the subset of users in D that respectively have churned /are loyal, i.e., $D^{churn} = \{(u_i,Y_i)|(u_i,Y_i) \in D$ and $C(u_i) = churn\}$. Moreover, we need the notion of corresponding transactions between the behavioral transactional database and characteristics transaction database,

$$\textbf{for } D' \subseteq D, A[D'] = \{(u_i, X) \mid (u_i, X) \in A \text{ and } \exists (u'_i, T) \in D' \text{ where } u_i = u'_i \}.$$

Intuively, *A[D']* contains all the transactions of A, where the user identifier is both in *A* and D'.

As a result, the triple ($Y_i, X_i, C(u_i)$) provides the behavioral and characterics data for user $u_i$, and also indicates whether the user has churned.

The overall goal of churn prediction is to learn the probability of($Y_i, X_i, C(u_i)$) = *churned,* i.e., to learn the probability that the user $u_j$ with behavioral and characteristics data $X_j$ and $Y_j$ will churn.

## 2. Common Approach for Churn Prediction

Common practice for learning a statistical model for outcome prediction is to use Logistics Regression, Naïve Bayes, or other predictive models on input sets A and the class label mapping C. More precisely, in exemplary embodiments of the present invention, a churn prediction model *M* may be derived by using an off-the-shelf predictive model $\varPhi$ applied on A and their corresponding class labels, i.e., *M* = $\varPhi$(A, C). For example, with Naïve Bayes the probabilty of churning for *user j* -- i.e.,

$$P\big(churn \big| (u_j, X_j)\big) = \frac{P(churn)P(X_j|churn)}{P(X_j)},$$

where *P*(*churn*) is the prior probability of churning on the training dataset, and *P*(*X_j|churn)* can be estimated by using a Maximum Likelihood estimate on A.

## 3. Taking Behavioral Data Into Account

Intuitively, the group of users can be first split into multiple (possibly partially overlapping) groups. The splitting can be done, for example, based on how customers are using the app, i.e., users with similar behavior are grouped together. Consequently a statistical model for churn prediction can be separately learned for each group.

In exemplary tests run by the inventors, the grouping of the users was done based upon the behavioral characteristics of a user. In particular, users with similar behavior were grouped together.

It is noted that, as used above, the term or concept "similar behavior" is used in the sense of similar browsing behavior, i.e., how a user navigated through the application. Frequent sequential patterns is one way, for example, to capture the similarity; when enough people visited screens in the sequence A-B-C, this can be identified as a frequent pattern. The grouping may then be further done on only the frequent patterns that are actually discriminating, because the non-discriminating ones are not informative for prediction purposes.

Additionally, the grouping was optimized to select those groups with ***deviating*** overall churn probability, that is, groups where the overall churn probability was far higher/lower than the overall churn probability. In order to compute this grouping, well known techniques such as, for example, frequent sequence mining, hidden Markov models, or variable length Markov chains can be used.

Next described in detail is how this deviating overall churn probability can be obtained using frequent sequence mining techniques.

## 4. Finding Frequent Sequential Discriminating Patterns

For two sequences $Y = \{y_1, ..., y_m\}$, $Z = \{z_1, ..., z_k\}$ it is said that Z is a **subsequence** of Y, denoted as $Z \leq Y,$ if and only if: there exists a sequence of length *k* in *Y* such that:

$$y_i = z_1, ..., y_{i+k} = z_k \text{ with } 1 \leq i \leq m - k.$$

The cover of a sequence Z in the transaction database D consists of the bin or cluster of transactions that supports Z in *D:*

$$cover\,(Z, D) = \{(u_i, Y) \mid (u_i, Y) \in D, Z < D\}.$$

The support of a sequence Z in transaction database D is the number of transactions in the cover of Z in D, $supp(Z,D) = | cover(Z,D)|$. Frequent sequence mining is about deriving all sequences with a support larger then a user supplied minimum support threshold. Discriminating frequent sequential patterns are patterns that discriminate between the classes, i.e., patterns that are far more common in the **churned** group than in the **loyal** customer group. Formally, the discriminatory values of a frequent sequential pattern P equals $\mathbf{max}(\mathbf{\mathit{supp}}((\mathbf{\mathit{P,D}}^{\mathit{churned}})/\mathbf{\mathit{supp}}(\mathbf{\mathit{P,D}}^{\mathit{loyal}}), \mathbf{\mathit{supp}}((\mathbf{\mathit{P,D}}^{\mathit{loyal}})/\mathbf{\mathit{supp}}(\mathbf{\mathit{P,D}}^{\mathit{churned}}))$.

In general the discriminatory value is a user defined parameter and can be used to fine tune the algorithm. An exemplary discriminatory value can be 0.6.

Given the previous definitions and discussion, pseudo-code for learning of the churn model is next presented. The output of the algorithms is the set of all frequent discriminating patterns $\mathcal{P}$ and a set of models $\mathcal{M}$.

> 1. Learn Churn Model (A,D,C)
>
> > *1.1.* $\mathcal{M}$ = {} //initialize the set of churn models to be empty
> >
> > 1.2. $\mathcal{P}$ = find discriminating frequent patterns on (D)
> >
> > 1.3. For each frequent sequential pattern P in $\mathcal{P}$
> >
> > > 1.3.1. $M_P$= learn Churn Model on $A[cover(_{PD})]$}
> > > 1.3.2.

$$\mathcal{M} = \mathcal{M} \cup M_P$$

> > 1.4. Return ($\mathcal{M}$, $\mathcal{P}$)

In exemplary embodiments of the present invention, a set of models arises because for every pattern, a classification model is constructed. A pattern is supported by a certain part of the data, and it is on this part the associated model may then be constructed.

## B. Deploying The Churn Model

In order to predict whether user $u_j$ will churn, it is assumed that the customer characteristics of $u_j$, i.e., $X_j$ and part of the behavioral characteristics, that is $Y_j$, are available. The behavioral characteristics of $u_j$ are then used to determine a group with a similar behavioral profile; this group has some pattern P as a common descriptor.

For example, from the behavioral characteristics $Y_j$, we can, for example, first find the best match from the set of patterns P, where *best* means in the sense of the longest subsequence. Thus, for all p in P, we test if p is a subsequence of $Y_j$. From all the matches, we then, for example, select the longest. In case there are multiple maximal subsequences that match, we select the most discriminating. If the unlikely case occurs that there are again multiple maximal subsequences, all equivalently discriminating, we may use both (and average the result).

Next, the model trained for pattern P, i.e., $M_P$ can be used to determine the churn probability of $X_j$. It is noted that since $Y_j$ is changing over time, the predictive model that will be selected can also change over time.

Practically, for all patterns that have been discovered in the learning phase, it is desired to find the best match with the current behavioral characteristics sequence $Y_j$. For the "best", a simple heuristic may be used: the **longest** sequence that is a subsequence of $Y_j$ is the best fit. When multiple equally long sequences are suited, we can compute for each of them a predicting score. Then the largest score for the churn class and the largest score for the loyal class are selected and returned. In terms of pseudo-code:

1. Predict Churn ($X_j$, $Y_j$, $\mathcal{M}$, $\wp$)

   1.1. maxmatch =0

   1.2. Out={}

   1.3. For all P in $\wp$ (#start with longest patterns first)

      1.3.1.  If $((P \preccurlyeq X_j)\ and\ (|P| \geq maxmatch))$

         1.3.1.1.  $Out = Out \cup \{$Compute probability of churn and loyal $(M_P, Y_j)\}$

         1.3.1.2.  $maxmatch = |P|$

   1.4. (churn,loyal) =  maximum value from Out

   1.5. Return (churn,loyal)

Besides predicting whether a user will churn, another aspect of exemplary embodiments of the present invention is to influence users to visit certain screens, i.e. to change user behavior with respect to app usage. Thus, we want to change how the user is using the app based upon the insights we have gained from the model as applied to his or her behavior thus far. For example, given that we have detected two groups of users of the chat app described above, and the first group has the behavioral pattern (w (welcome), s (signup), c (chat)) with overall probability of churn for this group equal to 90%. The second group, on the other hand, has the behavioral pattern (*w* (welcome), *s* (signup), *t* (tutorial)) with an overall churning probability of 10%. So, if a user visited the stages *w,s* we want to influence the user to now visit the tutorial screen *t*. This influencing can be done both online as well as offline. Offline (i.e., beforehand) influencing can, for example, be done by changing the User Interface to make the tutorial screen more visible. Online influencing (meaning in real time) can for example be achieved by automatically sending promotions.
Thus, a churn prediction approach is provided based on app usage data in addition to customer characteristics.

## III. Examples

### A. Example of Discriminating Patterns

### Churned Patterns

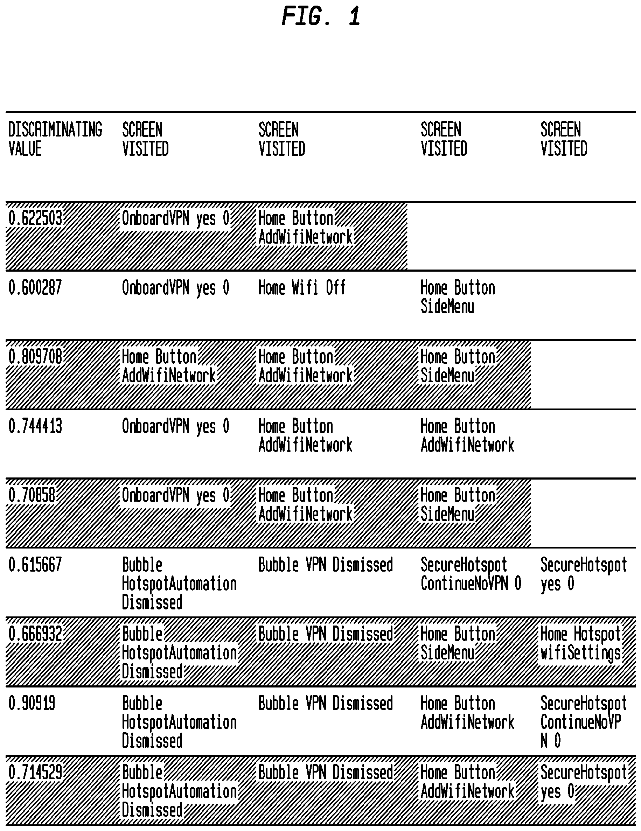

Fig. 1 depicts examples of discriminating patterns for the Churn class. The discriminating value equals the probability that the sequence is from the "Churn" class.

### Loyal Patterns

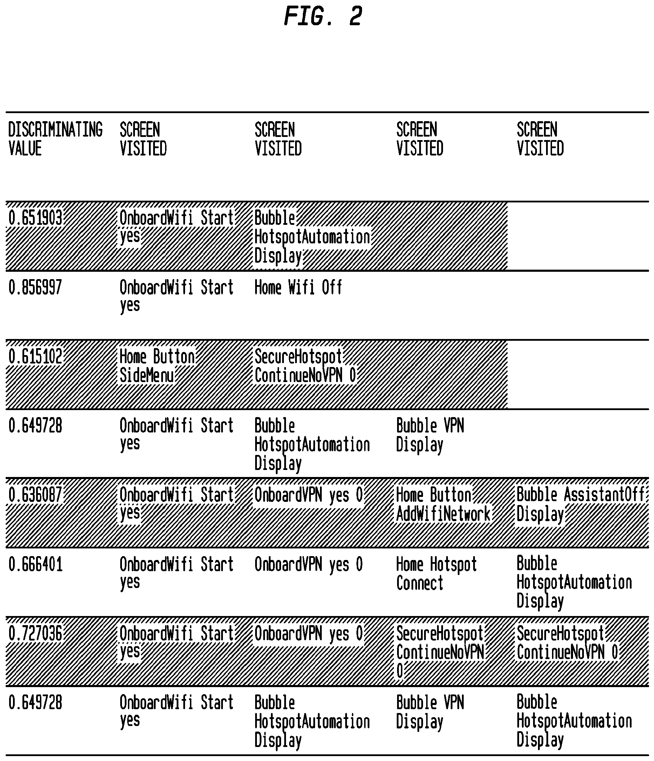

Fig. 2 depicts examples of discriminating patterns for the Loyals class, the discriminating value equals the probability that the sequence is from the "Loyal" class.
As may be readily noted, the discriminating value, $_{Loyal}$ = [1 - discriminating value, Churn].

### B. Detailed Churn Prediction Examples

Next described are two examples of churn prediction according to exemplary embodiments of the present invention.

### Example 1:

Taking the following behavioral data, from the group of churned users:
Networkinfo|GetStarted Pressed 0|OnboardWifi Start yes|OnboardVPN yes 0|Bubble HotspotAutomation Display|Bubble VPN Display|Bubble HotspotAutomation Dismissed|Bubble VPN Dismissed|Home Button AddWifiNetwork|Secure-Hotspot yes 0|SecureHotspot ContinueNoVPN 0|Home Button AddWifiNetwork|Home Button AddWifiNetwork|Home Button SideMenu|Home Button SideMenu|Side WifiAssistant Off|Side WifiAssistant On|Home Button AddWifiNetwork|Home Button AddWifiNetwork|Home Button Upgrade|Upgrade SecuredHotspot WifiSettings

Initially, when only the first action of a user is known, i.e., as in this case, it is only known thus far that the *Networkinfo* screen had been visited, there is no pattern that matches this sequence yet. As a result, the churn predicting model over the whole dataset (i.e. the global model) is used. The outcome is that this user will churn with a probability of 18.93% and hence be loyal with a probability of 81.07%.

It is noted that the *global churn model* is the churn model that is derived by using all of the available data. As above, this model may be used as fallback when there is no match with any of the derived discriminating sequential patterns.

As more screens were visited by the user, the outcome did not change until 14 screens were recorded. Here is a short trace of some of the intermediate stages:

Networkinfo|GetStarted Pressed 0 => no match, global model P(churn)= 18.93%
Networkinfo|GetStarted Pressed 0|OnboardWifi Start yes|OnboardVPN yes 0 => no match, global model P(churn)= 18.93%

This is because none of the discriminating patterns we derived matched (partly) with the first 13 screens. However, after the first 13 screen we have the following input:
**Networkinfo|GetStarted Pressed 0|OnboardWifi Start yes|OnboardVPN yes 0|Bubble HotspotAutomation Display|Bubble VPN Display|Bubble HotspotAutomation Dismissed|Bubble VPN Dismissed|Home Button AddWifiNetwork|SecureHotspot yes 0|SecureHotspot ContinueNoVPN 0|Home Button AddWifiNetwork|Home Button AddWifiNetwork|Home Button SideMenul**

There was now a match with one of the discriminating patterns from the churn class:
**Home Button AddWifiNetwork|Home Button AddWifiNetwork|Home Button SideMenu**

By selecting the churn predictive model trained only on data instances that supported this rule, we got: P(churn)=100%.

The rest of the screens that the user added did not lead to any different patterns matching the input sequence, and hence the best matching rule for this user remained:
**Home Button AddWifiNetwork|Home Button AddWifiNetwork|Home Button SideMenu**

**Example 2:**

The second example describes the various screens that a loyal user visited:
**networkinfo|GetStarted Pressed 0|OnboardWifi Start yes|Bubble HotspotAutomation Display|Bubble VPN Display|Bubble HotspotAutomation Dismissed|Bubble VPN Dismissed|SecureHotspot AlwaysOn Checked|Secure-Hotspot yes 0|SecureHotspot ContinueNoVPN 0|Home Button SideMenu|Home VPN On**

As in Example 1, here as well there were no matching discriminating patterns after the first three screens were visited. Thus, the following initial churn prediction was made:
**networkinfo|GetStarted Pressed 0|OnboardWifi Start yes => no match, global model P(churn)= 28.36%.**

With the addition of the next screen a match was found with the pattern:
**OnboardWifi Start yes|OnboardVPN yes 0|Bubble HotspotAutomation Display**
and the corresponding model estimates P(churn)= 0.04%. Adding another screen results in two matching discriminating patterns: the previous pattern "OnboardWifi Start yes|OnboardVPN yes 0|Bubble HotspotAutomation Display" and the following pattern:
**OnboardWifi Start yes|Bubble HotspotAutomation Display|Bubble VPN Display.**

Since the latter is the longer pattern (three events versus two), as per the rule described above, this latter one was selected and used for prediction, and thus now P(churn)=0.06%.

**IV. Exemplary Application Flow: Screens and Their Corresponding Names**

Next described is an exemplary application flow, with reference to Figs. 3-14. In the following description, events are sent to Google Analytics ("GA"). Each event sent to Google Analytics is an event in our behavioral database. In exemplary embodiments, other mobile tracking solutions might be used, such as, for example, Adobe Omniture, Flurry Analytics or any in-house developed software that tracks and sends app user interactions. In exemplary embodiments of the present invention, user data may be uploaded from a user's device to proprietary or cloud servers. Churn analysis, or a more detailed churn analysis, using up to the minute collective data for the given app, may, for example, be performed on those servers.

An exemplary application flow is described with reference to the screen shots of Figs. 3-14. With respect to each screen, a list of user interactions is provided, and the data based on such interactions that is sent to an analytics environment, such as GA, for example, is provided. Each time a user accesses a screen, or interacts with it, data capturing the user's actions can be sent to GA, as noted below.

**Activation**

When user opens the screen shown in Fig. 3, we send to GA the name of the page he is looking at, on this case:

**Activation**

• **When the user presses the "GetStarted" button the information sent to GA** is:

    ◦ "GetStarted","Pressed_0", "EventCounter", null
    ◦ "NetworkInfo","mobile operator type_mobile operator name", " EventCounter ", null

where the mobile operator type can, for example, contain the following information:

•     GSM or CDMA or None or SIP

**OnboardWiFi**

Fig. 4 depicts an exemplary Onboarding WiFi screen. When a user sees this screen the name of the page he is looking at is sent to GA, in this case:
**OnboardWifi**

•     **When the user taps "Start WiFi Automation" in Fig. 4, the information sent is:**
    ◦ " OnboardWifi", "Start_Yes", "EventCounter", null

•     **When the user taps "Maybe later" in Fig. 4, the information sent is:**
    ◦ " OnboardWifi", "Start_Later", "EventCounter", null

**OnboardVPN**

Fig. 5 depicts an exemplary Onboarding VPN screen. When a user sees this screen we send the name of the page he is looking at to GA, in this case:
**OnboardVPN**

•     **When the user taps "Got it", the information sent to GA is:**
    ◦ "OnboardVPN", "Yes_0", "EventCounter", null

**Coaching Bubbles**

As part of the Onboarding process shown in Figs. 4 and 5, coaching bubbles can, for example, be displayed, to help users learn the functionality of WiFi Assistant. Exemplary coaching bubbles are shown in Fig. 6.

•     **When the user sees these bubbles, the information sent is:**

    ◦ "Bubble", "HotspotAutomation_Display", "EventCounter", null
    ◦ "Bubble", "VPN_Displayed", "EventCounter", null
    ◦ "Bubble", "AssistantOff_Display", "EventCounter", null

•     **When the user dismisses these bubbles, the information sent is:**

    ◦ "Bubble", "HotspotAutomation_Dismissed", "EventCounter", null

◦ "Bubble", "VPN_Dismissed ", "EventCounter", null
◦ "Bubble", "AssistantOff_Dismissed", "EventCounter", null

**Home Screen**

Fig. 7 depicts an exemplary home screen. When a user opens this screen the name of the page he is looking at is sent to GA, in this case:
**Home**

- **When the user taps the "Wifi is Off ", the information sent is:**
  ◦ "Home", "Wifi_On", "EventCounter", null
- **When the user taps the "Wifi** is **On** ", **the information sent is:**
  ◦ "Home", "Wifi_Off", "EventCounter", null
- **When the user turns on VPN, the information sent is:**
  ◦ "Home", "VPN_On", "EventCounter", null
  (not sent first time user connect to hotspot and SecureHotspot screen is displayed)
- **When the user turns Off VPN, the information sent is:**
  ◦ "Home", "VPN_Off", "EventCounter", null

The buttons **"Wifi is Off" and "Wifi is On**" are tapable, thus allowing the interaction data to be created.
From a home screen as shown in Fig. 7, a user may tap the icon shown at the top left, seen in Fig. 7 as three horizontal bars.

- **When the user taps the top left icon to access the side menu the information sent is:**
  ◦ "Home", "Button_SideMenu", "EventCounter", null
- **When the user taps the "Go Pro", the information sent is:**
  ◦ "Home", "Button_Upgrade", "EventCounter", null
- **When the user taps the "+", the information sent is:**
  ◦ "Home", "Button_AddWifiNetwonk", "EventCounter", null

**Hotsopt Interactions**

Fig. 8 depicts an exemplary Hotspot Connect screen. A user would see this screen if, for example, she entered a Starbucks in Amsterdam, The Netherlands.

- **When the user taps on a hotspot and selects "Connect to network", the information sent is:**
  ◦ "Home", "Hotspot_Connect", "EventCounter", null
- **When the user taps on a hotspot and selects "Forget network", the information sent is:**
  ◦ "Home", "Hotspot_Forget", "EventCounter", null
- **When the user taps on a hotspot and selects "Modify network", the information sent is:**
  ◦ "Home", "Hotspot_WifiSettings", "EventCounter", null
- **When the user taps on a hotspot and selects "Disconnect to network", the information sent is:**
  ◦ "Home", "Hotspot_Disconnect", "EventCounter", null

**Secure Hotspot**

Fig. 9 depicts an exemplary Secure Hotspot screen. A user would see this screen if, for example, this is the first time the user chose to connect to the hotspot (e.g., Starbucks Amsterdam). When this screen is displayed the name of the page the user is viewing is sent to GA, in this case:
**SecureHotspot**

- **When the user taps the "Secure this Hotspot" button, the information sent is:**
  ◦ "SecureHotspot", "Yes", "EventCounter", null
- **When the user unchecks "Always use VPN for this hotspot" box, the information sent is:**
  ◦ "SecureHotspot", "AlwaysOn_Unchecked", "EventCounter", null
- **When the user checks "Always use VPN for this hotspot" box, the information sent is:**
  ◦ "SecureHotspot", "AlwaysOn_Checked", "EventCounter", null
- **When the user taps the "Continue without VPN" button, the information sent is:**

○ "SecureHotspot", "ContinueNoVPN", "EventCounter", null

**WiFi Settings**

Fig. 10 depicts an exemplary WiFi settings screen shot. When the user opens this screen the name of the page he is looking at is sent to GA, in this case:
**WifiSettings**
User interacitons with WiFi settings:

- **When the user changes Wifi automation to OFF, information sent is:**
  ○ "WifiSettings", "WiFiAuto_Off", "EventCounter", null
- **When the user changes Wifi automation to ON, information sent is:**
  ○ "WifiSettings", "WiFiAuto_On", "EventCounter", null
- **When the user changes VPN automation to OFF, information sent is:**
  ○ "WifiSettings", "VPNAuto_Off", "EventCounter", null
- **When the user changes VPN automation to ON, information sent is:**
  ○ "WifiSettings", "VPNAuto_On", "EventCounter", null
- **When the user taps on Upgrade, information sent is:**
  ○ "WifiSettings", "Upgrade", "EventCounter", null
- **When the user taps on "...", information sent is:**
  ○ "WifiSettings", "More", "EventCounter", null
- **When the user taps on "Forget Network", information sent is:**
  ○ "WifiSettings", "More_Forget", "EventCounter", null
- **When the user taps on Advanced, information sent is:**
  ○ "WifiSettings", "More_Advanced", "EventCounter", null
- **When the user taps on Log, information sent is:**
  ○ "WifiSettings", "More_Log", "EventCounter", null

**WiFi Settings Advanced**

Fig. 11 depicts an exemplary WiFi Settings Advanced screen shot. When the user opens this screen the name of the page he is looking at is sent to GA, in this case:
**WifiSettingsAdvanced**
User interacitons with WiFi Settings Advanced:

- **When the user unchecks Turn Wifi ON automatically, information sent is:**
  ○ "WifiSettings", "Advanced_AutoOnDisabled", "EventCounter", null
- **When the user checks Turn Wifi ON automatically, information sent is:**
  ○ "WifiSettings", "Advanced_AutoOnEnabled ", "EventCounter", null
- **When the user unchecks Turn Wifi OFF automatically, information sent is:**
  ○ "WifiSettings", "Advanced_AutoOffDisabled", "EventCounter", null
- **When the user checks Turn Wifi OFF automatically, information sent is:**
  ○ "WifiSettings", "Advanced_AutoOffEnabled", "EventCounter", null
- **When the user taps on "Clear ID", information sent is:**
  ○ "WifiSettings", "Advanced_ClearID", "EventCounter", null

**Upgrade**

Figs. 12 depicts an exemplary WiFi Settings Advanced pair of screen shots. When the user opens this screen the name of the page he is looking at is sent to GA, in this case:
**Upgrade**
User interacitons with Upgrade:

- **When the user taps " Secure Me", the information sent is:**
  ○ "Upgrade", "Payment_Display", "EventCounter", null
- **When the user complete payment process, the information sent is:**
  ○ "Upgrade", "Payment_Ok", "EventCounter", null
- **When the user taps " Cancel Subscription", the information sent is:**

◦ "Upgrade", "Cancel", "EventCounter", null
- **When the user taps on one secured hotspot, the information sent is:**
  ◦ "Upgrade", "SecuredHotspot_WifiSettings", "EventCounter", null

**Side Menu**

Fig. 13 depicts an exemplary Side Menu screen shot. The side menu may be accessed, as noted above, by a user tapping on the icon at the top left of the home screen, for example. When the user opens this screen the name of the page he is looking at is sent to GA, in this case:

**Side**
User interactions with Side Menus:

- **When the user taps "Go Pro" (seen at top right of Fig. 13), the information sent is:**
  ◦ "Side", "Button_Upgrade", "EventCounter", null
- **When the user change Wifi Assistant automation to OFF, information sent is:**
  ◦ "Side", "WifiAssistant_Off", "EventCounter", null
- **When the user change Wifi Assistant automation to ON, information sent is:**
  ◦ "Side", "WifiAssistant_On", "EventCounter", null
- **When the user taps "Share", the information sent is:**
  ◦ "Side", "Button_Shane", "EventCounter", null
  (also a screen event is sent as "Share" screen)
- **When the user taps "More Info", the information sent is:**
  ◦ "Side", "Button_About", "EventCounter", null
- **When the user taps "News", the information sent is:**
  ◦ "Side", "Button_News", "EventCounter", null
- **When the user taps "Rate us", the information sent is:**
  ◦ "Side", "Button_RateUs", "EventCounter", null

**About**

Fig. 14 depicts an exemplary About screen shot. A user can, for example, navigate to this screen from the side menu screen shown in Fig. 13. When the user opens the About screen the name of the page he is looking at is sent to GA, in this case:

**About**
◦ **When the user taps on these options a Screen event is sent**

**Wifi interactions from Android System Settings**

Wifi interactions outside Wifi Assistant

- **When a user turns off Wifi from Android settings Wifi Assistant is paused, and the following sent:**
  ◦ "System", "Assistant_Pause", "EventCounter", null

- **When a user turns on Wifi from Android settings we also turn on Wifi in Wifi Assistant and sent:**
  ◦ " System "," Assistant_Resume", "EventCounter", null

This event is also sent every time WiFi Assistant is resumed from the paused state. In exemplary embodiments of the present invention, this needs to be filtered in the analytics backend whenever resume was from a button pressed from the UI.

As can be seen in the detailed applicaiton flow presented above, for an exemplary application such as "AVG WiFi Assistant", by capturing the screens visited by a user, and the interactions of a user at each screen visited, systems and methods implementing exemplary embodiments of the present invention can use this behavior to operate on a database of many users, and predict churn or loyalty as to that application. If the method is applied to numerous applications of a single genre, say gaming applications, or social media applications, where correlations can be made between types of screens visited (e.g., all smartphone applications have an opening screen, a home screen and a user prefernces set of screens), or, for example, to newer versions of existing programs with some changes, it is possible to predict churn or loyalty on a user interacting with a new application using a relatively small, or even no, training set and the data and predictions from all similar applications. Such a method can, for example, be an improvement over simply using the overall percentage of a small training set for the new app, as described above.

**Incorporation of Both User Characteristics and Behavioral Data in Models**

In the exemplary model generation process described above, the discriminating patterns are behavioral data, i.e., sequences of screens visited and events engaged in at such screens. It is most often the case that the differences in behavior as regards an app are discriminating as to propensity to churn the app. However, this is not categoric. Sometimes user characteristics are more predictive, or user characteristics *in combination with* various behavioral interactive sequences more predictive, of propensity to churn. It is thus noted that two customers with the same behavioral sequences as regards an app may have quite different churn probabilities. There are some applications that are more friendly or geared to one customer demographic than another. For example, dating appplications are more desired by women in their 30s than are fantasy football gambling applicaitons. Similarly, bodybuilding applicaitons are more inviting to younger males. Thus, in such demogrpahic specific apps, it is often a combinaiton of the user characteristics and a short behavioral sequence that can best discriminate as to churn propensity. Thus, any optimal clustering of customer characteristics and behavioral data may be useful in various exemplary embodiemnts of the present invention, and all such clusters, and the resultant discriminating patterns for churn or loyalty are contemplated, and wihtin the scope of, the present invention.

**V. Non-Limiting Software and Hardware Examples**

**Exemplary Mobile Device and System**

FIG. 16 shows a high-level block diagram of a mobile device 1601. It will be further appreciated that the device shown in FIG. 16 is illustrative and that variations and modifications are possible. Mobile device 1601 can include a controller 1602, a wireless module 1604, a location module 1606, churn prediction module 108, a computer-readable medium (CRM) 1610, a display module 1612, and an input module 1614. Mobile device 1601 can include additional modules. In some embodiments, mobile device 1601 can be a sufficient size, dimension, and weight to enable the device to be easily moved by a user. For example, mobile device 1601 can be pocket size.

Controller 1602, which can be implemented as one or more integrated circuits, can control and manage the overall operation of mobile device 1601. For example, controller 1602 can perform various tasks, such as retrieving various assets that can be stored in CRM 1610, accessing the functionalities of various modules (e.g., interacting with other Bluetooth® enabled devices via a Bluetooth® module), executing various software programs (e.g., operating systems and applications) residing on CRM 1610, and so on. In some embodiments, controller 1602 can include one or more processors (e.g., microprocessors or microcontrollers) configured to execute machine-readable instructions. For example, controller 1602 can include a single chip applications processor. Controller 1602 can further be connected to CRM 1610 in any suitable manner.

Wireless module 1604 can include any suitable wireless communication technology. For example, wireless module 1604 could include a Bluetooth® module, a radio frequency (RF) module, a WiFi module, and/or the like. The Bluetooth® module can include any suitable combinations of hardware for performing wireless communications with other Bluetooth®-enabled devices and allows an RF signal to be exchanged between controller 1602 and other Bluetooth®-enabled devices. In some embodiments, a Bluetooth® module can perform such wireless communications according to Bluetooth® Basic Rate/Enhanced Data Rate (BR/EDR) and/or Bluetooth® Low Energy (LE) standards. The Bluetooth® protocol, in general, enables point-to-point wireless communications between multiple devices over short distances (e.g., 30 meters). Bluetooth® has gained widespread popularity since its introduction and is currently used in a range of different devices. In order to allow Bluetooth® to be used in a greater variety of applications, a low energy variant of the technology was introduced in the Bluetooth® Core Specification, Version 4.0. Bluetooth® Low Energy (LE), in general, enables devices to wirelessly communicate while drawing low amounts of power. Devices using Bluetooth® LE can often operate for more than a year without requiring their batteries to be recharged.

For example, a Bluetooth® module can include suitable hardware for performing device discovery, connection establishment, and communication based on only Bluetooth® LE (e.g., single mode operation). As another example, a Bluetooth® module can include suitable hardware for device discovery, connection establishment, and communication based on both Bluetooth® BR/EDR and Bluetooth® LE (e.g., dual mode operation). As still another example, a Bluetooth® module can include suitable hardware for device discovery, connection establishment, and communication based only on Bluetooth® BR/EDR.

An RF module can include any suitable combinations of hardware for performing wireless communications with wireless voice and/or data networks. For example, an RF module can include an RF transceiver that enables a user of mobile device 1601 to place telephone calls over a wireless voice network.

A WiFi module can include any suitable combinations of hardware for performing WiFi-based communications with other WiFi-enabled devices. For example, a WiFi module may be compatible with IEEE 802.11a, IEEE 802.11b, IEEE 802.11g and/or IEEE 802.11n.

Location module 1606 can include any suitable location technology using one or more wireless signals to determine a current location. In some embodiments, location module 1606 includes a global positioning system (GPS) module. In some embodiments, location module 1606 includes one or more of the following: WiFi location module, cellular location module, crowd-sourced WiFi location module, time of flight calculations (ToF) location module, and the like.

Churn prediction module 1608 can include code that, when executed, predicts, based on a user's interaction with a given app also stored and operable on the mobile device, a probability that the user will churn the app, or be loyal to it. For example, using the methods described above, churn prediction module 1608 can send a prediction to a back end server operated by the app's publisher, for example. The app publisher can then, as described above, message the user in various attempts to persuade he or she to take actions which lessen the likelihood that he or she will churn. Moreover, the churn prediction module 1608 can continually download updated collective user data as well as algorithmic updates to fine tune its predictive models, and can, similarly, also perform device-side collection and aggregation of app usage data and transmit that to a back-end server.

CRM 1610 can be implemented, e.g., using disk, flash memory, random access memory (RAM), hybrid types of memory, optical disc drives or any other storage medium that can store program code and/or data. CRM 1610 can store software programs that are executable by controller 102, including operating systems, applications, and related program code (e.g., code for churn prediction module 1608).

Software programs (also referred to as software or apps herein) can include any program executable by controller 1602. In some embodiments, certain software programs can be installed on mobile device 1601 by its manufacturer, while other software programs can be installed by a user. Examples of software programs can include operating systems, navigation or other maps applications, locator applications, productivity applications, video game applications, personal information management applications, applications for playing media assets and/or navigating a media asset database, applications for controlling a telephone interface to place and/or receive calls, and so on. Although not specifically shown, one or more application modules (or set of instructions) may be provided for launching and executing one or more applications, e.g., various software components stored in medium 1610 to perform various functions for mobile device 1601.

Display module 1612 can be implemented using any suitable display technology, including a CRT display, an LCD display (e.g., touch screen), a plasma display, a direct-projection or rear-projection DLP, a microdisplay, and/or the like. In various embodiments, display module 1612 can be used to visually display user interfaces, images, and/or the like.

Input module 1614 can be implemented as a touch screen (e.g., LCD-based touch screen), a voice command system, a keyboard, a computer mouse, a trackball, a wireless remote, a button, and/or the like. Input module 1614 can allow a user to provide inputs to invoke the functionality of controller 1602. In some embodiments, input module 1614 and display module 1612 can be combined or integrated. For example, mobile device 1601 can include an LCD-based touch screen that displays images and also captures user input. Illustratively, a user can tap his or her finger on a region of the touch screen's surface that displays an icon. The touch screen can capture the tap and, in response, start a software program associated with the icon. Upon starting the software program, a graphical user interface for the application can be displayed on the touch screen for presentation to the user.

Various exemplary embodiments of the invention as described above can be implemented as one or more program products, software applications and the like, for use with a computer system, e.g., a smartphone or other mobile user device. The terms program, software application, and the like, as used herein, are defined as a sequence of instructions designed for execution on a computer system or data processor. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

The program(s) of the program product or software may define functions of the embodiments (including the methods described herein) and can be contained on a variety of computer readable media. Illustrative computer readable media include, but are not limited to: (i) information permanently stored on non-writable storage medium (e.g., read-only memory devices within a computer such as CD-ROM disk readable by a CD-ROM drive); (ii) alterable information stored on writable storage medium (e.g., floppy disks within a diskette drive or hard-disk drive); or (iii) information conveyed to a computer by a communications medium, such as through a computer or telephone network, including wireless communications. The latter embodiment specifically includes information downloaded from the Internet and other networks. Such computer readable media, when carrying computer-readable instructions that direct the functions of the present invention, represent embodiments of the present invention.

In general, the routines executed to implement the embodiments of the present invention, whether implemented as part of an operating system or a specific application, component, program, module, object or sequence of instructions may be referred to herein as a "program." The computer program typically is comprised of a multitude of instructions that will be translated by the native computer into a machine-readable format and hence executable instructions. Also, programs are comprised of variables and data structures that either reside locally to the program or are found in memory or on storage devices. In addition, various programs described herein may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

It is also clear that given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.) It should be appreciated that the invention is not limited to the specific organization and allocation or program functionality described herein.

The present invention may be realized in hardware, software, or a combination of hardware and software. A system according to a preferred embodiment of the present invention can be realized in a centralized fashion in one computer system, or in a distributed fashion where different elements are spread across several interconnected computer systems, including cloud connected computing systems and devices. Any kind of computer system-or other apparatus adapted for carrying out the methods described herein-is suited, and preferably the present invention is implemented in a smartphone, tablet or other personal electronic device. A typical combination of hardware and software could be a general purpose computer system with a computer program that, when being loaded and executed, controls the computer system such that it carries out the methods described herein. On the user device side, for example, a typical combination of hardware and software could be receiver provided with one or more data processors with a computer program that, when being loaded and executed, controls the data processors such that they carry out the methods described herein.

Each computer system may include, inter alia, one or more computers and at least a signal bearing medium allowing a computer to read data, instructions, messages or message packets, and other signal bearing information from the signal bearing medium. The signal bearing medium may include non-volatile memory, such as ROM, Flash memory, Disk drive memory, CD-ROM, and other permanent storage. Additionally, a computer medium may include, for example, volatile storage such as RAM, buffers, cache memory, and network circuits. Furthermore, the signal bearing medium may comprise signal bearing information in a transitory state medium such as a network link and/or a network interface, including a wired network or a wireless network, that allow a computer to read such signal bearing information.

Although specific embodiments of the invention have been disclosed, those having ordinary skill in the art will understand that changes can be made to the specific embodiments without departing from the scope of the invention. The scope of the invention is not to be restricted, therefore, to the specific embodiments. The above-presented description and figures are intended by way of example only and are not intended to limit the present invention in any way except as set forth in the following claims. For example, while this disclosure speaks in terms of predicting churn or loyalty probabilities for an application on a mobile telephone, as noted above, its techniques and systems are applicable to *any* type of application, on any type of user device. It is particularly noted that persons skilled in the art can readily combine the various technical aspects of the various elements of the various exemplary embodiments that have been described above in numerous other ways, all of which are considered to be within the scope of the invention, as set forth by the appended claims.

**Claims**

1.   A processor-implemented method for predicting user churn, the method comprising:

> collecting, using one or more data processors:

>> user data corresponding to a user of an application program running on
>> a user device (1601), the user data including user basic attribute information, and
>> user interaction data associated with the application program,
>> including at least one of (i) which user interface screens were visited, (ii) in which sequence, and (iii) which
>> events were engaged in at each screen;

> determining, using the data processors, a similar user group for the user based on the user data;
> determining, using the data processors, one or more discriminating patterns from the user interaction data;
> selecting at least one discriminating pattern of said discriminating patterns according to a defined set of rules;
> calculating a probability that the user will churn or be loyal to the application program based on said at least
> one discriminating pattern; and at least one of: storing the probability on the user device (1601), and transmitting the probability for the user to a server.

2. The method according to claim 1, **characterized in that** the similar user group is assigned based on clustering done on one of a training set.

3. The method according to claim 1, **characterized in that** the similar user group is assigned based on updated clustering performed by a back-end server.

4. The method according to claim 1, **characterized in that** the similar user group is assigned based on initial clustering done on a training set, as periodically updated using all then available user data,

5. The method according to any of the previous claims, **characterized in that** the discriminating patterns comprise one of: a sequence of user interface screens visited by the user, or a sequence of user interface screens visited by the user and the actions taken at each user interface screen.

6. The method according to any of the previous claims, **characterized in that** the selected discriminating pattern is chosen based on length of the discriminating pattern.

7. The method according to any of the previous claims, further comprising choosing a longest discriminating pattern, and in that if there exist multiple discriminating patterns of equal length, the one with the highest churn probability is chosen.

8. The method according to any of the previous claims, **characterized in that** a probability that a user will churn is calculated after each user interaction with a user interface screen.

9. The method according to claim 8, further comprising sending one or more messages to the user to direct the user to visit one or more specific user interface screens to diminish the probability of churning when the probability is above a defined level indicating churn.

10. The method according to any of the previous claims, **characterized in that** the calculating a probability is performed on the user device.

11. The method according to any of the previous claims, further comprising performing a more detailed churn analysis using up to the minute collective data for the given app.

12. A non-transitory computer-readable medium (1610) including one or more sequences of instructions that, when executed by one or more processors, causes the one or more processor to perform the method according to any of the previous claims.

13. A computer system (1601) comprising:

    one or more processors; and
    a memory (1610) accessible to the one or more processors, the memory (1610) storing instructions executable by the one or more processors to perform the method according to any of claims 1-11.


**Patentansprüche**

1. Prozessor-implementiertes Verfahren zum Vorhersagen einer Benutzerabwanderung, wobei das Verfahren umfasst:

    Sammeln, unter Verwendung eines oder mehrerer Datenprozessoren von: Benutzerdaten, die einem Benutzer eines Anwendungsprogramms entsprechen, das auf einer Benutzervorrichtung (1601) läuft, wobei die Benutzerdaten Benutzergrundeigenschaftsinformationen und Benutzerinteraktionsdaten umfassen, die den Anwendungsprogrammen zugeordnet sind, umfassend mindestens eine der folgenden Angaben: (i) welche Benutzerschnittstellenbildschirme besucht wurden, (ii) in welcher Folge und (iii) an welchen Ereignissen man an jedem Bildschirm tätig war;
    Bestimmen einer ähnlichen Benutzergruppe für den Benutzer basierend auf den Benutzerdaten unter Verwendung der Datenprozessoren;

Bestimmen eines oder mehrerer Unterscheidungsmuster aus den Benutzerinteraktionsdaten unter Verwendung der Datenprozessoren;

Auswählen mindestens eines Unterscheidungsmusters der Unterscheidungsmuster gemäß einem festgelegten Regelwerk;

Berechnen einer Wahrscheinlichkeit, dass der Benutzer abwandern oder dem Anwendungsprogramm treu sein wird, basierend auf dem mindestens einen Unterscheidungsmuster; und

Speichern der Wahrscheinlichkeit auf der Benutzervorrichtung (1601) oder/und Übertragen der Wahrscheinlichkeit für den Benutzer an einen Server.

2. Verfahren nach Anspruch 1, **dadurch gekennzeichnet, dass** die ähnliche Benutzergruppe basierend auf Clusterbildung aus einem Trainingssatz zugewiesen wird.

3. Verfahren nach Anspruch 1, **dadurch gekennzeichnet, dass** die ähnliche Benutzergruppe basierend auf aktualisierter Clusterbildung zugewiesen wird, die von einem Back-End-Server durchgeführt wird.

4. Verfahren nach Anspruch 1, **dadurch gekennzeichnet, dass** die ähnliche Benutzergruppe basierend auf anfänglicher Clusterbildung aus einem Trainingssatz zugewiesen wird, der periodisch unter Verwendung aller dann verfügbaren Benutzerdaten aktualisiert wird.

5. Verfahren nach einem der vorhergehenden Ansprüche, **dadurch gekennzeichnet, dass** die Unterscheidungsmuster entweder eine Folge von durch den Benutzer besuchten Benutzerschnittstellenbildschirmen oder eine Folge von durch den Benutzer besuchten Benutzerschnittstellenbildschirmen und den an jedem Benutzerschnittstellenbildschirm vorgenommenen Aktionen umfassen.

6. Verfahren nach einem der vorhergehenden Ansprüche, **dadurch gekennzeichnet, dass** das ausgewählte Unterscheidungsmuster basierend auf der Länge des Unterscheidungsmusters gewählt wird.

7. Verfahren nach einem der vorhergehenden Ansprüche, ferner umfassend die Auswahl eines längsten Unterscheidungsmusters und, wenn mehrere Unterscheidungsmuster von gleicher Länge existieren, die Auswahl des einen mit der höchsten Abwanderungswahrscheinlichkeit.

8. Verfahren nach einem der vorhergehenden Ansprüche, **dadurch gekennzeichnet, dass** eine Abwanderungswahrscheinlichkeit nach jeder Benutzerinteraktion an einem Benutzerschnittstellenbildschirm berechnet wird.

9. Verfahren nach Anspruch 8, ferner umfassend das Senden einer oder mehrerer Nachrichten an den Benutzer, um den Benutzer zum Besuch an eine oder mehrere spezifische Benutzerschnittstellenbildschirme zu verweisen, um die Wahrscheinlichkeit eines Abwanderns zu verringern, wenn die Wahrscheinlichkeit oberhalb eines festgelegten Grades liegt, der eine Abwanderung anzeigt.

10. Verfahren nach einem der vorhergehenden Ansprüche, **dadurch gekennzeichnet, dass** das Berechnen einer Wahrscheinlichkeit auf der Benutzervorrichtung durchgeführt wird.

11. Verfahren nach einem der vorhergehenden Ansprüche, ferner umfassend das Durchführen einer detaillierten Abwanderungsanalyse unter Verwendung hochaktueller kollektiver Daten für die vorgegebene App.

12. Nichttransitorisches computerlesbares Medium (1610), das eine oder mehrere Folgen von Anweisungen umfasst, die, wenn durch einen oder mehrere Prozessoren ausgeführt, den einen oder mehrere Prozessoren veranlassen, das Verfahren nach einem der vorhergehenden Ansprüche durchzuführen.

13. Computersystem (1601), umfassend:

einen oder mehrere Prozessoren; und
einen Speicher (1610), auf den der eine oder mehrere Prozessoren zugreifen können, wobei der Speicher (1610) Anweisungen speichert, die durch den einen oder mehrere Prozessoren ausführbar sind, um das Verfahren nach einem der Ansprüche 1-11 durchzuführen.

**Revendications**

1. Procédé mis en œuvre par processeur pour prédire une résiliation d'utilisateur, le procédé comprenant :

la collecte, au moyen d'un ou plusieurs processeurs de données, de :

données d'utilisateur correspondant à un utilisateur d'un programme d'application exécuté sur un dispositif d'utilisateur (1601), les données d'utilisateur comprenant des informations d'attribut de base d'utilisateur, et des données d'interaction d'utilisateur associées au programme d'application, comprenant au moins l'un parmi (i) quels écrans d'interface utilisateur ont été visités, (ii) dans quelle séquence, et (iii) quels événements ont été exécutés dans chaque écran ;

la détermination, au moyen des processeurs de données, d'un groupe d'utilisateurs similaires pour l'utilisateur sur la base des données d'utilisateur ;
la détermination, au moyen des processeurs de données, d'un ou plusieurs profils discriminants à partir des données d'interaction d'utilisateur ;
la sélection d'au moins un profil discriminant desdits profils discriminants selon un ensemble de règles défini ;
le calcul d'une probabilité que l'utilisateur résilie ou reste fidèle au programme d'application sur la base dudit au moins un profil discriminant ;
et au moins l'un parmi le stockage de la probabilité sur le dispositif d'utilisateur (1601), et la transmission de la probabilité pour l'utilisateur à un serveur.

2. Procédé selon la revendication 1, **caractérisé en ce que** le groupe d'utilisateurs similaires est assigné sur la base du regroupement effectué sur l'un d'un ensemble d'apprentissage.

3. Procédé selon la revendication 1, **caractérisé en ce que** le groupe d'utilisateurs similaires est assigné sur la base d'un regroupement mis à jour effectué par un serveur dorsal.

4. Procédé selon la revendication 1, **caractérisé en ce que** le groupe d'utilisateurs similaires est assigné sur la base d'un regroupement initial effectué sur un ensemble d'apprentissage, périodiquement mis à jour en utilisant toutes les données d'utilisateur disponibles à ce stade.

5. Procédé selon l'une quelconque des revendications précédentes, **caractérisé en ce que** les profils discriminants comprennent l'un parmi : une séquence d'écrans d'interface utilisateur visités par l'utilisateur, ou une séquence d'écrans d'interface utilisateur visités par l'utilisateur et les actions effectuées dans chaque écran d'interface utilisateur.

6. Procédé selon l'une quelconque des revendications précédentes, **caractérisé en ce que** le profil discriminant sélectionné est choisi sur la base de la longueur du profil discriminant.

7. Procédé selon l'une quelconque des revendications précédentes, comprenant en outre le choix d'un profil discriminant le plus long, et dans lequel, s'il existe des profils discriminants multiples de longueur égale, celui ayant la probabilité de résiliation la plus élevée est choisi.

8. Procédé selon l'une quelconque des revendications précédentes, **caractérisé en ce qu'**une probabilité qu'un utilisateur résilie est calculée après chaque interaction d'utilisateur avec un écran d'interface utilisateur.

9. Procédé selon la revendication 8, comprenant en outre l'envoi d'un ou plusieurs messages à l'utilisateur pour suggérer à l'utilisateur de visiter un ou plusieurs écrans d'interface utilisateur spécifiques afin de diminuer la probabilité de résiliation lorsque la probabilité est au-dessus d'un niveau défini indiquant une résiliation.

10. Procédé selon l'une quelconque des revendications précédentes, **caractérisé en ce que** le calcul d'une probabilité est effectué sur le dispositif d'utilisateur.

11. Procédé selon l'une quelconque des revendications précédentes, comprenant en outre la conduite d'une analyse de résiliation plus détaillée utilisant les données collectives jusqu'au niveau de la minute pour l'application donnée.

12. Support lisible par ordinateur non transitoire (1610) comprenant une ou plusieurs séquences d'instructions qui, lorsqu'elles sont exécutées par un ou plusieurs processeurs, amènent les un ou plusieurs processeurs à conduire le procédé selon l'une quelconque des revendications précédentes.

**13.** Système informatique (1601) comprenant :

un ou plusieurs processeurs ; et
une mémoire (1610) accessible aux un ou plusieurs processeurs, la mémoire (1610) stockant des instructions exécutables par les un ou plusieurs processeurs pour conduire le procédé selon l'une quelconque des revendications 1 à 11.

# FIG. 1

| DISCRIMINATING VALUE | SCREEN VISITED | SCREEN VISITED | SCREEN VISITED | SCREEN VISITED |
|---|---|---|---|---|
| 0.622503 | OnboardVPN yes 0 | Home Button AddWifiNetwork | | |
| 0.600287 | OnboardVPN yes 0 | Home Wifi Off | Home Button SideMenu | |
| 0.809708 | Home Button AddWifiNetwork | Home Button AddWifiNetwork | Home Button SideMenu | |
| 0.744413 | OnboardVPN yes 0 | Home Button AddWifiNetwork | Home Button AddWifiNetwork | |
| 0.70858 | OnboardVPN yes 0 | Home Button AddWifiNetwork | Home Button SideMenu | |
| 0.615667 | Bubble HotspotAutomation Dismissed | Bubble VPN Dismissed | SecureHotspot ContinueNoVPN 0 | SecureHotspot yes 0 |
| 0.666932 | Bubble HotspotAutomation Dismissed | Bubble VPN Dismissed | Home Button SideMenu | Home Hotspot wifiSettings |
| 0.90919 | Bubble HotspotAutomation Dismissed | Bubble VPN Dismissed | Home Button AddWifiNetwork | SecureHotspot ContinueNoVPN 0 |
| 0.714529 | Bubble HotspotAutomation Dismissed | Bubble VPN Dismissed | Home Button AddWifiNetwork | SecureHotspot yes 0 |

# FIG. 2

| DISCRIMINATING VALUE | SCREEN VISITED | SCREEN VISITED | SCREEN VISITED | SCREEN VISITED |
|---|---|---|---|---|
| 0.651903 | OnboardWifi Start yes | Bubble HotspotAutomation Display | | |
| 0.856997 | OnboardWifi Start yes | Home Wifi Off | | |
| 0.615102 | Home Button SideMenu | SecureHotspot ContinueNoVPN 0 | | |
| 0.649728 | OnboardWifi Start yes | Bubble HotspotAutomation Display | Bubble VPN Display | |
| 0.636087 | OnboardWifi Start yes | OnboardVPN yes 0 | Home Button AddWifiNetwork | Bubble AssistantOff Display |
| 0.666401 | OnboardWifi Start yes | OnboardVPN yes 0 | Home Hotspot Connect | Bubble HotspotAutomation Display |
| 0.727036 | OnboardWifi Start yes | OnboardVPN yes 0 | SecureHotspot ContinueNoVPN 0 | SecureHotspot ContinueNoVPN 0 |
| 0.649728 | OnboardWifi Start yes | Bubble HotspotAutomation Display | Bubble VPN Display | Bubble HotspotAutomation Display |

# FIG. 3

Welcome to

**AVG WiFi Assistant**
βeta

Stops tracking and phishing by
automatically switching off your WiFi
when not in use.

FREE data encryption (VPN) when
you connect to any WiFi hotspot.

By tapping "Get Started" you are agreeing to our
Terms of Service and Privacy Policy

Get Started

## FIG. 4

WiFi Automation turns WiFi ON near known hotspots and OFF when you don't need it.

Helps protect you from WiFi trackers and phishing.

Start WiFi Automation

Maybe Later

## FIG. 5

*FIG. 6*

Location Learned!                                     X

We'll turn WiFi off when you leave,
and back on when you return.

☑ Don't show this again

WiFi automatically turned OFF              X

Turn WiFi on to learn a new hotspot location.

☑ Don't show this again

⊗

Turn VPN On
to secure your data for this hotspot

☐ Don't show this again

## FIG. 7

# FIG. 8

## FIG. 9

# FIG. 10

⟨ Starbucks Amsterdam

**Status**
**Connected**

Signal Strength
**Good**

Security
**WPAD2PSK**

Link speed
**26Mbps**

IP address
**10.0.238.81**

---

**VPN Automation**                    ( ON )
Turn on VPN automatically when
you connect to this hotspot.

---

**WiFi Automation**                   ( ON )
WiFi will be turned on and off when
you enter and leave the hotspot.

---

**Upgrade to Full VPN**        $3.99/mth
Upgrade to unlimited data
encryption for all hotspots.

# FIG. 11

FIG. 12

EP 3 387 595 B1

## FIG. 13

📶📶 🔋 12:00

☰  🔲 AVG WiFi Assistant*ᵝ*  🛡️ Go Pro

**Pro**
Get Unlimited data Encryption

ⓘ

**WiFi Assistant**
Your location turns WiFi On/Off

( ON )

**Share**
Protect friends and family

**About**
AVG WiFi Assistant

**News**○
Get updated on the latest news on WiFi security

@avgwifi Via @npmews: Here's One Big
Way Your Mobile Phone Could Be Open
To Hackers http://n.pr/ToYm6xD

Love WiFi Assistant?

Rate Us

★★★★★

# FIG. 14

‹ 🗺 About

Log

Power Savings

Terms of Service

Help

AVG Labs

📶 🔋 12:00

FIG. 15

| ReferralSource | Country | Pro | LimitBandwidth | LimitHotspots | Language | OSVersion | City | Brand | Model | Type | ScreenRes1 | ScreenRes2 |
|---|---|---|---|---|---|---|---|---|---|---|---|---|
| WiFiAssistant | Hong Kong | 1 Free VPN | 1 Not reached | 1 Not reached | zh-tw | 4.3 | Hong Kong | Sony | C5306 | mobile | 1184 | 720 |
| (direct) | Mexico | 1 Free VPN | 1 Not reached | 1 Not reached | es-us | 4.3 | Ciudad Nezahualcoyotl | Huawei | Y530-U051 | mobile | 854 | 480 |
| (direct) | United Kingdom | 1 Free VPN | 2 Limit reached | 1 Not reached | en-gb | 5 | Norwich | Samsung | SM-N9005 | mobile | 1920 | 1080 |
| WiFiAssistant | United Kingdom | 1 Free VPN | 1 Not reached | 1 Not reached | pl-pl | 5 | Stalowa Wola | LG | D855 | mobile | 2392 | 1440 |
| (direct) | Canada | 1 Free VPN | 2 Limit reached | 1 Not reached | en-ca | 4.4.2 | Montreal | Samsung | SGH-I747M | mobile | 1280 | 720 |
| WiFiAssistant | United States | 1 Free VPN | 1 Not reached | 1 Not reached | en-us | 4.4.4 | Clarksville | Unknown | Model | NULL | NULL | NULL |
| (direct) | Lithuania | 1 Free VPN | 2 Limit reached | 1 Not reached | en-gb | 4.4.4 | Panevezys | Sony | D5803 | mobile | 1184 | 720 |
| WiFiAssistant | Guadeloupe | 1 Free VPN | 1 Not reached | 1 Not reached | fr-fr | 4.4.2 | NULL | Unknown | Model | NULL | NULL | NULL |
| (direct) | Mexico | 0 No VPN | 0 No VPN | 0 No VPN | es-us | 4.4.2 | Merida | Samsung | SGH-M919V | mobile | 1920 | 1080 |
| WiFiAssistant | Germany | 0 No VPN | 0 No VPN | 0 No VPN | de-de | 5 | Berlin | Samsung | SM-G900F | mobile | 1920 | 1080 |
| (direct) | Germany | 0 No VPN | 0 No VPN | 0 No VPN | de-de | 4.4.2 | Berlin | Samsung | GT-I9505 | mobile | 1920 | 1080 |
| (direct) | United Kingdom | 1 Free VPN | 1 Not reached | 1 Not reached | en-gb | 4.4.4 | Torquay | Samsung | SM-N910F | mobile | 2560 | 1440 |
| WiFiAssistant | Italy | 0 No VPN | 0 No VPN | 0 No VPN | it-it | 5 | Macerata | Samsung | SM-G900F | mobile | 1920 | 1080 |
| WiFiAssistant | Taiwan | 0 No VPN | 0 No VPN | 0 No VPN | zh-tw | 4.4.4 | NULL | Sony | D6653 | mobile | 1776 | 1080 |
| WiFiAssistant | Spain | 1 Free VPN | 2 Limit reached | 1 Not reached | es-es | 4.4.4 | Madrid | Samsung | SM-N910F | mobile | 2560 | 1440 |
| WiFiAssistant | France | 0 No VPN | 0 No VPN | 0 No VPN | fr-fr | 4.4.2 | Paris | Samsung | GT-I9195 | mobile | 960 | 540 |
| (direct) | India | 1 Free VPN | 1 Not reached | 1 Not reached | en-in | 5.0.2 | Chennai | Motorola | XT1068 | mobile | 1184 | 720 |
| WiFiAssistant | Canada | 1 Free VPN | 1 Not reached | 1 Not reached | en-ca | 4.4.4 | Toronto | Sony | D6603 | mobile | 1776 | 1080 |
| (direct) | Italy | 1 Free VPN | 2 Limit reached | 1 Not reached | it-it | 4.1.2 | Milan | Samsung | GT-I8190 | mobile | 800 | 480 |
| (direct) | Singapore | 1 Free VPN | 1 Not reached | 1 Not reached | en-ch | 4.0.3 | Lahore | HTC | X515 | mobile | 960 | 540 |
| (direct) | Sweden | 1 Free VPN | 1 Not reached | 1 Not reached | sv-se | 4.4.4 | Mjolby | Sony | D5503 | mobile | 1184 | 720 |
| (direct) | Germany | 1 Free VPN | 1 Not reached | 1 Not reached | de-de | 5 | Cologne | Samsung | SM-G900F | mobile | 1920 | 1080 |

EP 3 387 595 B1

# FIG. 16

## MOBILE DEVICE 1601

**EP 3 387 595 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015100887 A1